# EUROPEAN PATENT SPECIFICATION

(11) **EP 3 898 207 B1**
(45) Date of publication and mention of the grant of the patent: **22.02.2023**
(21) Application number: 19842703.1
(22) Date of filing: 21.12.2019
(51) Int. Cl.: B29C 70/50, B29C 70/08, B29C 70/38, B29B 11/16, B29B 15/12, B29C 65/00, B29B 15/10

(54) **AUTOMATED PLACEMENT OF PREPREG TAPES TO FORM COMPOSITE PARTS**
AUTOMATISCHE PLATZIERUNG VON PREPREG-BÄNDERN ZUR HERSTELLUNG VON VERBUNDTEILEN
PLACEMENT AUTOMATISÉ DE BANDES PRÉ-IMPRÉGNÉES POUR FORMER DES PIÈCES COMPOSITES

(30) Priority: 21.12.2018 US 201862783972 P
(43) Date of publication of application: 27.10.2021
(73) Proprietor: Cytec Industries, Inc., Princeton, NJ 08540 (US)
(72) Inventor: ROGERS, Scott, Placentia, CA 92820 (US); HOWARD, Stephen J., Chino, CA 91710 (US); LUCAS, Scott, Anaheim, CA 92807 (US); PONSOLLE, Dominique, Winona, MN 55987 (US)
(74) Representative: Lederer & Keller Patentanwälte Partnerschaft mbB
(86) International application number: PCT/US2019/068197
(87) International publication number: WO 2020/132663

(56) References cited:
- EP-A1- 3 266 917
- EP-A2- 1 144 190
- US-A- 6 139 942
- US-A1- 2015 017 853

## Description

The present disclosure generally relate to the fabrication of composite parts.

### BRIEF DESCRIPTION OF THE DRAWINGS

**FIGS. 1A-1B** illustrates a method for forming a partially impregnated prepreg according to one embodiment.
**FIGS. 2A-2B** illustrates a method for forming a partially impregnated prepreg according to another embodiment.
**FIG. 3** shows a partially impregnated prepreg containing toughening particles according to another embodiment.
**FIG. 4** shows a partially impregnated prepreg not according to the claims.
**FIG. 5** is an optical image showing a cross-sectional view of a cured composite laminate prepared by Automated Fiber Placement (AFP) using conventional tacky prepreg tapes.
**FIG. 6** is the top view of a slit, partially-impregnated prepreg prepared according to one example.
**FIG. 7** is an optical image showing a cross-sectional view of a cured composite laminate prepared by using one-side tacky prepreg tapes prepared according to one example.

### DETAILED DESCRIPTION

Composite materials consisting of a matrix resin and reinforcement fibers are typically used in areas where high strength and low weight are important, for example, aircraft parts. Most composites used for aerospace structural applications comprise thermosetting resins and high-strength fibers such as continuous carbon fibers. Typically, these thermosetting resins are cured at high temperature (e.g., 250-350 °F or 121-177 °C) and under high pressure (e.g., 85 psi or 586 kPa) using an autoclave.

A conventional manufacturing method for forming composite parts is a prepreg lay-up process, in which sheets of resin-impregnated composite material called "prepregs" are laid up, one on top of another, in a stacking arrangement on a tool surface that can reproduce the shape of the composite part. The layup of prepregs are then consolidated and cured to produce a hardened composite part.

A major problem encountered in the manufacture of thick composite parts is porosity (or voids) in the final composite part. Void formation and growth in composite laminates is primarily due to entrapped volatiles. Composite parts processed under similar conditions have been found to result in significantly different void levels resulting in production slowdowns. Void formation seriously compromises the mechanical properties of the composite material and in many cases requires large repair costs due to rejection of parts.

One way in which a void-free laminate can be manufactured is to utilize an autoclave. An autoclave is capable of subjecting the layup of prepregs to elevated temperatures and pressures so that they can readily coalesce to form a reinforced composite material. If the pressure is maintained during the gelation of the resin and its subsequent cure, a void-free matrix is achieved. However, while pressure application from an autoclave is attractive in view of its potential for providing a void-free reinforced composite part, it is nevertheless expensive in view of the high capital cost of the equipment involved. Furthermore, autoclaving is deemed undesirable when the size of the reinforced composite part is too large to be efficiently cured in such a manner. Additionally, when making reinforced composite parts at low production rates, low cost tools made of wood or low glass transition temperature polymer tools are commonly used. When these tools are used, however, composite parts can only be cured using relatively low temperatures and pressures. Thus, the use of an autoclave is not practical in these circumstances.

A cheaper alternative to using an autoclave is a vacuuming process called Vacuum Bag Only (VBO) in which the layup of prepregs is placed on a tool surface and then enclosed by an gas-impervious, flexible membrane (called "vacuum bag"). The volume enclosed by the membrane is evacuated and the assembly of prepreg layup and tool is heated up slowly. While pressure application using a vacuum bag is more cost effective than employing an autoclave, the resulting laminate is usually of inferior quality because of the occurrence of voids in the resin matrix. The voids are trapped in both the matrix resin and interlaminar regions between sheets or plies of prepregs.

A solution to the void problem is to use partially impregnated prepregs in the layup process. The partially impregnated prepreg consists of a fiber layer partially impregnated with a curable resin composition. When a layup of partially impregnated prepregs are heated in a VBO process, the resin fully infuses into the fiber layer, filling in the resin-free areas. Once cured, a void-free laminate is achieved. Such a partially impregnated prepreg is known from EP1144190 A2, corresponding to WO01/00405.

The partially impregnated prepreg can be fabricated by pressing a resin film or two resin films onto one surface or side of a fiber layer (e.g. fabric) such that the resin penetrates partly through the thickness of the fiber layer. Preferably, both the top and bottom surfaces or sides of the fiber layer are partially impregnated when preparing the partially impregnated prepreg such that there is a resin-free region of dry fibers in the middle of the prepreg. The resin-free region in the prepreg provides escape path through which entrapped air and/or other volatiles in the prepreg may be removed when a vacuum is applied to the prepreg layup. Typically, such partially impregnated prepreg contains a resin content from about 25% to about 50% by weight based on the total weight of the resin and fiber layer.

Although such partially impregnated prepregs can be used to fabricate void-free composite laminate, they cannot be slit into narrow-width, continuous strips, also called "prepreg slit tapes", that are suitable for automated placement processes such as Automated Reinforcement Laying (ATL) and Automated Fiber Placement (AFP) due the low resin content or lack of resin in the fiber bed which leads to fuzzy slit product with poor width control, thereby jamming the fiber placement machine.

ATL and AFP have been used to increase speed and efficiency of the lay-up process. ATL or AFP process involves automatically dispensing a plurality of narrow-width, flat strips of material such as prepreg tapes, side by side, onto a tool surface to create a layer of large dimensions, referred to as a "ply". This automated placement method is done at high speed and is typically capable of laying down prepreg tapes in a variety of configurations corresponding to the surface of a selected tool surface that reproduces the shape of the final composite part. Control of the slit edge quality is required to maintain laydown speeds and to avoid gaps and overlaps in the lay-up which lead to defects in the cured part structure.

An ATL or AFP machine commonly includes a placement head, a robotic system for moving the placement head in different directions across a tool surface, storage creels on which continuous strips of prepreg tapes, are wound, and mechanisms for guiding the tapes from the creels onto the placement head. The placement head includes a rotatable compaction roller and conveying means for conveying the tapes from the creels to the compaction roller. The compaction roller is configured to come into contact against the tool surface in order to apply the tapes against the tool surface or a prior disposed ply of tapes. The machine further includes cutting means, e.g. a blade, for cutting the length of the continuous reinforcement from the supply creel. The placement head may be configured to deposit multiple tapes simultaneously during a single passage.

It is desirable to be able to use AFP machines that automatically lay down slit thermoset prepreg tapes to produce composite structural parts, which can be subsequently cured in a vacuum bag system. The impregnation method common in the industry is a dual film approach that places the air removal mechanism at the centerline of the fiber tows. The need to slit the prepreg to narrow widths further defines the minimum level of impregnation which reduces the amount of dry fiber at the centerline, which in turn restricts air evacuation while trapping air between two tacky plies. Slitting of a resin-impregnated prepreg would require high impregnation level, typically, above 90%. Such impregnation level can measured by a water pickup test, whereby a sample of prepreg uptakes water, in the fiber direction, into the dry fiber spaces within it. Below this level of impregnation, the dry fibers within the prepreg become dislodged during slitting. Thus, the air removal mechanism is hindered by the higher level of impregnation required for slitting.

The present disclosure provides an automated placement process that is intended to solve the aforementioned issues relating to slitting performance, level of impregnation, and interlaminar porosity. This process includes forming a sheet of partially impregnated prepreg and slitting the same into continuous prepreg tapes. The length of the tape is continuous or is very long relative to its width, for example, 100-100,000 times its width. The partially impregnated prepreg tape may have a width of about 0.125 in to about 12 in (or about 0.3 cm to about 30.5 cm). In one embodiment, the prepreg tape has a width of about 0.125 in to about 2.0 in (or about 0.3 cm to about 5.0 cm), or about 0.25 in to about 0.50 in (or about 0.6 cm to about 1.28 cm). In another embodiment, the tape has a width of about 6 in to about 12 in (or about 15.2 cm to about 30.5 cm). In continuous form, the surfacing tape can be wound up into a roll for storage before its application in an automated process.

To form a composite laminate, the prepreg tapes are laid up via an automated placement process, e.g., ATL or AFP, on a tool or mold surface to form a composite laminate. In the ATL/AFP process, individual prepreg tapes are laid down directly onto a mandrel or mold surface at high speed, using one or more numerically controlled placement heads to dispense, clamp, cut and restart each tape during placement. The prepreg tapes are dispensed side by side to create a layer of a desired width and length, often including controlled gaps between tapes to aid evacuation, and then additional layers are built onto a prior layer to provide a prepreg layup with a desired thickness. The subsequent tapes may be oriented at different angles relative to prior tapes. The ATL/AFP system is equipped with means for dispensing and compacting the tapes directly onto the mandrel surface.

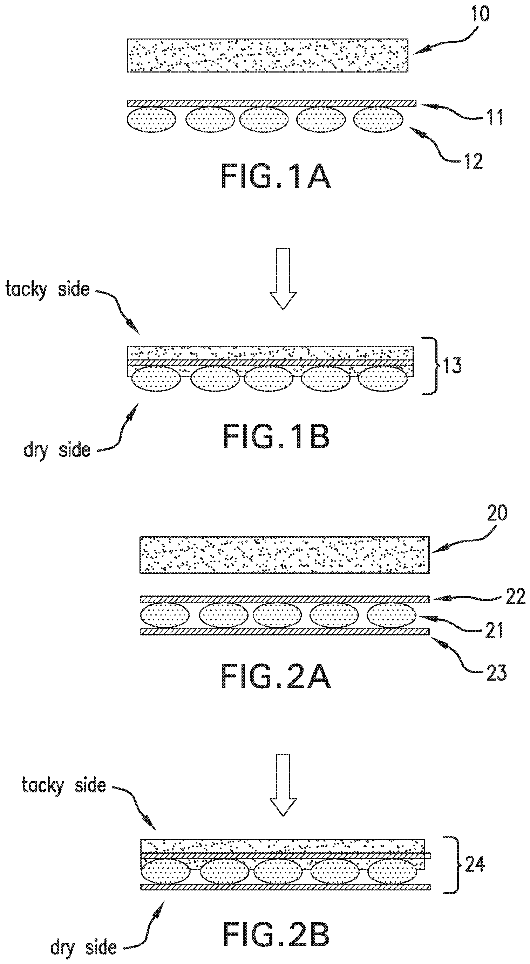

**FIGS. 1A** and **1B** illustrate a method for forming a partially-impregnated prepreg according to one embodiment. In this embodiment, a layer of curable resin **10** is pressed onto a nonwoven veil **11** which is adjacent to a layer of unidirectional fibers in the form of tows **12** so as to form a partially-impregnated prepreg **13.** Preferably, the nonwoven veil **11** the fiber tows **12** are bonded to each other as a fibrous laminate prior to being impregnated with the resin. The term "unidirectional" means aligning in parallel in the same direction. Each fiber tow **12** is a bundle of a plurality of continuous fiber filaments. The curable resin layer **10** is pressed onto the veil 10 and fiber tows 12 with the application of heat and/or pressure. The application of heat causes the resin **10** to soften. The soften resin **10** impregnates the nonwoven veil **11** completely but only partially impregnates the layer of unidirectional fiber tows **12,** resulting in a partially-impregnated prepreg **13** with a continuous resin surface on one side, referred to as the "tacky side", and an opposite dry, non-tacky side, which does not have such continuous resin surface. The tacky side is attributed to the presence of the uncured resin **10,** which is tacky at room temperature (20°C to 25°C). The term "tacky" as used in reference to the resin surface means that it is sticky to the touch.

The mass of resin in the partially impregnated prepreg is referred to as the matrix resin. The nonwoven veil is embedded in the matrix resin, i.e., the nonwoven veil is inside the resin matrix, while the fiber tows are not completely surrounded by the matrix resin.

The term "impregnate" in this context refers to infusing or introducing a molten or liquid resin into interstices or openings of a fibrous material. In reference to the layer of unidirectional fiber tows **12,** the phrase "partially impregnated" refers to the partial penetration of the resin **10** into the spaces between the unidirectional fiber tows such that the fiber tows are partly surrounded by the resin, i.e., are not completely surrounded by the resin.

Prior to resin impregnation, the nonwoven veil **11** and the layer of unidirectional fiber tows **12** may be bonded to each other using at least one binder to enhance the bonding. In a preferred embodiment, a combination of different binders is applied. Alternatively, the nonwoven veil **11** is formed of a thermoplastic material that can be thermally bonded to the layer of unidirectional fiber tows **12** by application of heat and pressure.

In the embodiment shown by **FIG. 1B****,** the resin content of the partially impregnated prepreg **13** is from about 25% to about 50% by weight based on the total weight of the prepreg.

In another embodiment, illustrated by **FIGS. 2A** and **2B****,** a curable resin layer **20** is pressed onto an assembly of unidirectional fiber tows **21** sandwiched between two nonwoven veils **22** and **23** to form a partially impregnated prepreg **24.** The fibers tows may be bonded to the two nonwoven veils prior to resin impregnation. Only one of the veil is embedded in the curable resin layer 20 in the final prepreg 24, and the fiber tows are not completely surrounded by the matrix resin. The partially impregnated prepreg **24** has a tacky side due the presence of the resin and an opposite dry, non-tacky side attributed to the outer nonwoven veil **23,** which is free of such resin.

In the embodiment shown by **FIG. 2B****,** the resin content of the partially impregnated prepreg **24** is from about 25% to about 50% by weight based on the total weight of the prepreg.

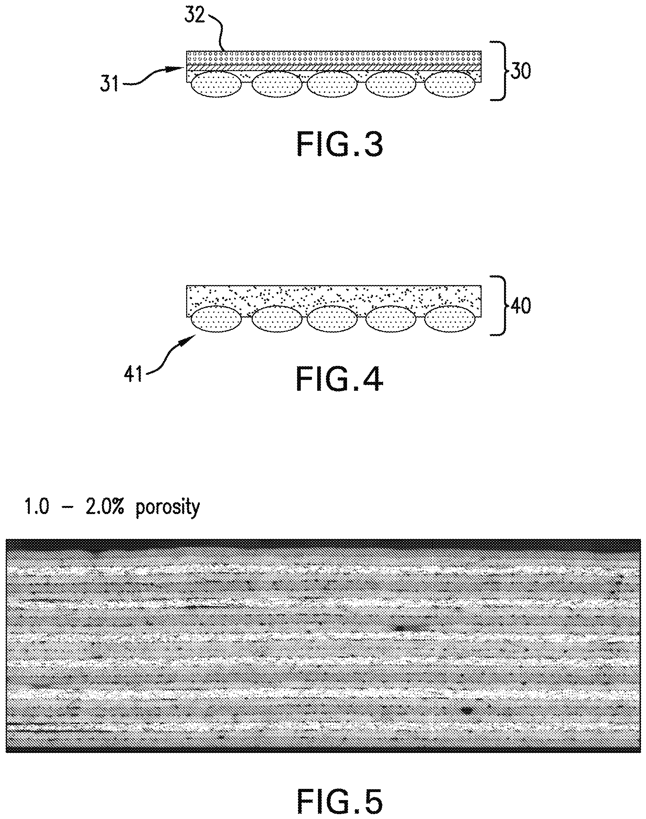

In one embodiment, the resin layer in **FIG. 1A** or **FIG. 2A** contains polymeric toughening particles such that, when the resin layer is pressed into the fibrous laminate, the particles are filtered out by the nonwoven veil and are located only on one side of the nonwoven veil. **FIG. 3** illustrates a partially impregnated prepreg **30** with particles on one side of the embedded nonwoven veil **31.**

The partially impregnated prepreg described above is slit using a conventional cutting machine to form a plurality of narrow-width, continuous strips of prepreg, i.e., prepreg tapes, having a length that is at least 10 times its width, for example, 100 to 1000 times its width. Slitting is preferably along the longitudinal length of the fiber tows. One advantage of the disclosed prepreg configuration is that slitting can be carried out without creating fuzz at the cut edges. Moreover, slitting can be carried out without any polymeric backing sheet or release paper attached to either side of the initial prepreg ply. Any backing sheet or release paper used during the formation of the partially impregnated prepreg is removed prior to slitting. For use in an automated placement machine such as ATL/AFP machines, the prepreg tapes may have a width of up to 5 cm (or 2in in). According to one embodiment, each tape has a width within the range of 0.6 cm-5 cm or 0.32 cm-1.28 cm, and a length that is at least 100 times its width. Optionally, a release liner (which may be made of polyester) is applied to the tacky resin surface of the slit prepreg tape and the slit prepreg tape together with the release liner is wound onto a spool. The release liner is wider in dimensions than the prepreg tape and functions to prevent the tacky resin surface of the prepreg tape from adhering to the dry side while being wound on a spool. Such spools can be installed into an ATL/AFP machine.

**FIG. 4** shows another embodiment, not according to the claims, in which the partially impregnated prepreg 40 does not include any nonwoven veil. In this embodiment, the fiber tows 41 are pre-treated with a binder composition prior to resin film impregnation. The fiber tows are arranged in parallel without any gap between the tows. It is not necessary to have gaps between the fiber tows for the purpose disclosed herein, however, small gaps are possible to allow further penetration of the resin film into the fiber layer. In one embodiment, a liquid binder composition (to be described in further details below) is applied to a layer of unidirectional fiber tows, then a resin layer is pressed into the unidirectional fiber tows to form the partially impregnated prepreg shown in FIG. 4. Alternatively, the liquid binder composition is applied to the carbon fibers at the end of the carbon fiber manufacturing process and prior to bundling the fibers into tows. The binder-treated fiber tows are then used in resin film impregnation to form the partially impregnated prepregs.

The partially impregnated prepreg of the present disclosure preferably has a low level of impregnation, up to 87%, in some embodiments, 75%-87%, as determined by water pick-up test.

### Veil/Fibers Assembly

In embodiments in which the nonwoven veil is present, the nonwoven veil for use in the partially impregnated prepreg may comprise fibers that are randomly oriented or randomly arranged. The veil's fibers may include inorganic fibers or polymeric fibers. In some embodiments, the veil is composed of carbon fibers or thermoplastic fibers or a combination carbon and thermoplastic fibers. The fiber length may vary from 1/8 in (0.32 cm) to 2 in (5.08 cm) long. The areal weight of the nonwoven veil in this embodiment is preferably less than 10 grams per square meter (gsm).

Alternatively, the nonwoven veil is in the form of a thermoplastic grid or a porous, thermoplastic membrane with a controlled pattern of apertures. The thermoplastic grid or porous membrane may have an areal weight in the range of 2-50 gsm, preferably 2-20 gsm, more preferably 2-10 gsm.

Prior to resin impregnation, the unidirectional fibers (in the form of tows) and the nonwoven veil may be bonded to each other using one or more binders to enhance bonding. According to one embodiment, a method for applying binder includes: applying a binder, in particulate form or liquid form, to the fiber layer of spread unidirectional fibers in form of tows; and bonding a nonwoven veil to at least one side of the fiber layer. Alternatively, the binder is applied as particles or a liquid composition to the nonwoven veil and the veil is then bonded to the fiber layer. In another alternative embodiment, the binder is used in the fabrication of the nonwoven veil. The binder-containing veil is then bonded to the fiber layer of unidirectional fibers.

In one embodiment, the binder is a solid at a temperature of up to 50°C, has a softening point at a temperature in the range of 65°C to 125°C, and comprises a blend of epoxy resin and thermoplastic polymer, but is void of any catalyst or cross-linking agent which is active above 65°C. The thermoplastic polymer in the binder may be a polyarylsulphone polymer. In one embodiment, the thermoplastic polymer is a polyethersulphone-polyetherether sulphone (PES-PEES) copolymer. The method for making this solid binding material may be found in U.S. Patent No. 8,927,662, assigned to Cytec Technology Corp., the content of which is incorporated herein by reference.

According to another embodiment, the binder is an aqueous binder dispersion containing (a) one or more multifunctional epoxy resins, (b) at least one thermoplastic polymer, (c) one or more surfactants selected from anionic surfactants and nonionic surfactants, (d) water, and preferably, is essentially free of organic solvents. Optional additives such as organic or inorganic fillers and a defoamer may also be included in the binder composition. The thermoplastic polymer in the binder dispersion may be a polyarylsulphone polymer, for example, PES or a PES-PEES copolymer.

According to another embodiment, two different types of binders are applied to the assembly of unidirectional fibers and nonwoven veil to provide cohesiveness to the resulting laminate. In this embodiment, a first binder, in particulate form or liquid form, is first applied to the fiber layer of unidirectional fibers or the nonwoven veil, the veil is bonded to at least one side of the fiber layer to form a fibrous laminate, followed by applying a second binder, in the form of a liquid composition, to the fibrous laminate, e.g. by dip coating, and drying the binder-treated fibrous laminate in an oven. In an alternative embodiment, the first binder is used in the fabrication of the nonwoven veil. The binder-containing veil is then bonded to the fiber layer of unidirectional fibers to form a fibrous laminate, followed by the application of the second liquid binder and drying.

The liquid binder composition, which may be a polymer emulsion, is applied to coat and infiltrate the fibrous laminate. Water is then evaporated according to a controlled time/temperature profile to achieve the desired physical properties balance. The liquid binder composition is applied so that it is distributed throughout the fibrous laminate.

As an example, the liquid binder composition may be a water-borne dispersion containing: (i) a copolymer of polyhydroxyether and polyurethane, (ii) a cross-linker; and optionally, (iii) a catalyst. The cross-linker may be an aminoplast cross-linker, for example, methoxyalkyl melamine class of aminoplast cross-linkers. The catalyst may include, but are not limited to, proton donating acids such as carboxylic, phosphoric, alkyl acid phosphates, sulfonic, di-sulfonic acids and/or Lewis acids such as aluminum chloride, bromide or halide, ferric halide, boron tri-halides, and many others in both categories as is well known to one skilled in the art.

The total content of binder(s) in the fibrous laminate is about 15% or less by weight, e.g. 0.1 and 15% by weight, based on the total weight of the laminate. Neither the first binder nor the second binder discussed above forms a continuous layer on the surfaces of the fibrous laminate. As such, the fibrous laminate is porous and permeable to molten resin during resin impregnation to form the partially impregnated prepreg.

The application of one or more binders as described above is preferred when the nonwoven veil is composed of carbon fibers or other inorganic fibers.

In some embodiments, the nonwoven veil is made of a thermoplastic material that functions as a binding material. In such embodiments, a single nonwoven thermoplastic veil is bonded to at least one side of the fiber layer of unidirectional fibers by application of heat and pressure. This bonding process is referred to as thermal bonding. The nonwoven thermoplastic veil may be bonded to one side of the fiber layer or on opposite sides of the fiber layer such that the fiber layer is sandwiched between two nonwoven thermoplastic veils. The material of the nonwoven thermoplastic veil may be selected from: polyamides, polyphthalamides, polyimides, polyetherimide (PEI), polyesters, polyphenyleneoxides, thermoplastic polyurethanes, polyacetals, polyolefins, polyarylsulphones (including polyethersulfone (PES), polyetherethersulfone (PEES)), polyphenylene sulfone, polyaryletherketone (PAEK) (including polyetheretherketones (PEEK), polyetherketoneketone (PEKK)), liquid crystal polymers (LCP), phenoxys, acrylics, acrylates, mixtures and copolymers thereof.

As discussed above, the unidirectional fibers may be in the form of continuous fiber tows. Each fiber tow is composed of hundreds of smaller continuous fiber filaments. The fiber tows may have 1000 to 100,000 fiber filaments per tow, and in some embodiments, 3000 to 24000 filaments per tow. The fiber filaments may have cross-sectional diameters within the range of 3-15 µm, preferably 4-7 µm. Suitable fibers are those used as structural reinforcement of high-performance composites, such as composite parts for aerospace and automotive applications. The structural fibers may be made from high-strength materials such as carbon (including graphite), glass (including E-glass or S-glass fibers), quartz, alumina, zirconia, silicon carbide, and other ceramics, and tough polymers such as aramids (including Kevlar), high-modulus polyethylene (PE), polyester, poly-p-phenylene-benzobisoxazole (PBO), and hybrid combinations thereof. For making high-strength composite structures, such as primary parts of an airplane, the unidirectional fibers preferably have a tensile strength of greater than 500 ksi. In a preferred embodiment, the unidirectional fibers are carbon fibers.

### Curable Resin

The curable resin layer for forming the partially impregnated prepreg is formed from a thermosettable resin composition containing one or more uncured thermoset resins as major components (making up the largest portion in wt% of composition). Upon curing, the thermoset resins in the resin composition undergo crosslinking, and the composition becomes a hardened material. Suitable thermoset resins include, but are not limited to, epoxy resins, imides (such as polyimide or bismaleimide), vinyl ester resins, cyanate ester resins, isocyanate modified epoxy resins, phenolic resins, furanic resins, benzoxazines, formaldehyde condensate resins (such as with urea, melamine or phenol), polyesters, acrylics, hybrids, blends and combinations thereof. Upon curing, such thermosettable resin composition becomes hardened.

The terms "cure" and "curing" as used in this disclosure refer to the hardening of a material by molecular cross-linking brought about by chemical reaction, ultraviolet radiation or heat. Materials that are "curable" are those capable of being cured, i.e. becoming hardened.

Suitable epoxy resins include polyglycidyl derivatives of aromatic diamine, aromatic mono primary amines, aminophenols, polyhydric phenols, polyhydric alcohols, polycarboxylic acids. Examples of suitable epoxy resins include polyglycidyl ethers of the bisphenols such as bisphenol A, bisphenol F, bisphenol S and bisphenol K; and polyglycidyl ethers of cresol and phenol based novolacs.

Specific examples are tetraglycidyl derivatives of 4,4'-diaminodiphenylmethane (TGDDM), resorcinol diglycidyl ether, triglycidyl-p-aminophenol, triglycidyl-m-aminophenol, bromobisphenol F diglycidyl ether, tetraglycidyl derivatives of diaminodiphenylmethane, trihydroxyphenyl methane triglycidyl ether, polyglycidylether of phenol-formaldehyde novolac, polyglycidylether of o-cresol novolac or tetraglycidyl ether of tetraphenylethane.

Commercially available epoxy resins suitable for use in the host matrix resin include N,N,N',N'-tetraglycidyl diamino diphenylmethane (e.g. MY 9663, MY 720, and MY 721 from Huntsman); N,N,N',N'-tetraglycidyl-bis(4-aminophenyl)-1,4-diiso-propylbenzene (e.g. EPON 1071 from Momentive); N,N,N',N'-tetraclycidyl-bis(4-amino-3,5-dimethylphenyl)-1,4-diisopropylbenzene, (e.g. EPON 1072 from Momentive); triglycidyl ethers of p-aminophenol (e.g. MY 0510 from Hunstman); triglycidyl ethers of m-aminophenol (e.g. MY 0610 from Hunstman); diglycidyl ethers of bisphenol A based materials such as 2,2-bis(4,4'-dihydroxy phenyl) propane (e.g. DER 661 from Dow, or EPON 828 from Momentive, and Novolac resins preferably of viscosity 8-20 Pa·s at 25°C; glycidyl ethers of phenol Novolac resins (e.g. DEN 431 or DEN 438 from Dow); di-cyclopentadiene-based phenolic novolac (e.g. Tactix^{®} 556 from Huntsman); and diglycidyl derivative of dihydroxy diphenyl methane (Bisphenol F) (e.g. PY 306 from Huntsman).

Generally, the curable resin composition contains one or more thermoset resins in combination with other additives such as curing agents, curing catalysts, co-monomers, rheology control agents, tackifiers, inorganic or organic fillers, thermoplastic and/or elastomeric polymers as toughening agents, stabilizers, inhibitors, pigments, dyes, flame retardants, reactive diluents, and other additives well known to those skilled in the art for modifying the properties of the matrix resin before or after curing.

The toughening agents may be in the form of polymeric toughening particles. The polymeric toughening particles that are suitable for the purposes herein include thermoplastic or elastomeric particles. For thermoplastic particles, the thermoplastic polymers may be selected from: polyimide, polyamideimide (PAI), polyamide (PA/Nylon), polyphthalamide, polyetherketone. polyetheretherketone, polyetherketoneketone, polyaryletherketones, polyphenylenesulfide, liquid crystal polymers, cross-linked polybutadiene, polyacrylic, polyacrylonitrile, polystyrene, polyetherimide (PEI), polyamide, polyimide, polysulfone, polyethersulfone (PES), poly phenylene oxide (PPO), poly ether ketones, polyaryletherketones (PAEK) such as polyetheretherketone (PEEK) and polyetherketoneketone (PEKK), polyphenyl sulfides (PPS), polyhydroxyethers, styrenebutadiene, polyacrylates, polyacetol, polybutyleneterephthalate, polyamide-imide, polyetherethersulfone (PEES), blends thereof, or copolymers thereof.

The polymeric toughening particles may be of any three-dimensional shape, and in some embodiments, they are substantially spherical. In some embodiments, the toughening particles have an aspect ratio of about 1:1. With reference to toughening particles, the term "aspect ratio" refers to the ratio of the largest cross sectional dimension of the particle to the smallest cross sectional dimension of the particle.

For the purposes disclosed herein, the polymeric toughening particles may have a mean particle size (d50) of less than about 100 µm, for example, within the range of about 10 µm to about 50 µm, or within the range of about 15 µm to about 30 µm. The mean particle sizes as disclosed herein can be measured by a laser diffraction technique, for example, using Malvern Mastersizer 2000 which operates in the 0.002 nanometer - 2000 micron range. "d50" represents the median of the particle size distribution, or alternatively is the value on the distribution such that 50% of the particles have a particle size of this value or less.

For spherical particles (with aspect ratio of approximately 1:1), the mean particle size refers to its diameter. For non-spherical particles, the mean particle size refers to the largest cross sectional dimension of the particles.

Generally, if toughening agents are added, they are present in an amount up to 20% by weight based on the total weight of the curable resin composition. If the polymeric toughening particles are added to the composition of the resin layer, the content of the polymeric toughening particles may be about 2% to about 20% by weight based on the total weight of the curable resin layer, for example, about 10% to about 15%.

The toughening particles may be soluble or insoluble in the thermosettable resin composition during curing thereof. Insoluble particles remain as discreet particles in the cured polymer matrix after curing, while soluble particles dissolve into the surrounding resin upon curing the resin. Determining whether certain particles are insoluble or soluble relates to the solubility of the particles in a particular resin system in which they reside.

The addition of curing agent(s) and/or catalyst(s) in the curable resin composition is optional, but the use of such may increase the cure rate and/or reduce the cure temperatures, if desired. The curing agent is suitably selected from known curing agents, for example, aromatic or aliphatic amines, or guanidine derivatives. An aromatic amine curing agent is preferred, preferably an aromatic amine having at least two amino groups per molecule, and particularly preferable are diaminodiphenyl sulphones, for instance where the amino groups are in the meta- or in the para-positions with respect to the sulphone group. Particular examples are 3,3'- and 4,4'-diaminodiphenylsulphone (DDS); methylenedianiline; bis(4-amino-3,5-dimethylphenyl)-1,4-diisopropylbenzene; bis(4-aminophenyl)-1,4-diisopropylbenzene; 4,4'methylenebis-(2,6-diethyl)-aniline (MDEA from Lonza); 4,4'methylenebis-(3-chloro, 2,6-diethyl)-aniline (MCDEA from Lonza); 4,4'methylenebis-(2,6-diisopropyl)-aniline (M-DIPA from Lonza); 3,5-diethyl toluene-2,4/2,6-diamine (D-ETDA 80 from Lonza); 4,4'methylenebis-(2-isopropyl-6-methyl)-aniline (M-MIPA from Lonza); 4-chlorophenyl-N,N-dimethyl-urea (e.g. Monuron); 3,4-dichlorophenyl-N,N-dimethyl-urea (e.g. DIURON TM) and dicyanodiamide (e.g. AMICURE TM CG 1200 from Pacific Anchor Chemical).

Suitable curing agents also include anhydrides, particularly polycarboxylic anhydrides, such as nadic anhydride, methylnadic anhydride, phthalic anhydride, tetrahydrophthalic anhydride, hexahydrophthalic anhydride, methyltetrahydrophthalic anhydride, endomethylenetetrahydrophtalic anhydride, and trimellitic anhydride.

### Vacuum Bag Only Process

To form a composite structure, the one-side tacky prepreg tapes disclosed herein may be used in an automated placement process, e.g. ATL or AFP, to form a stack of prepreg plies followed by consolidation and curing using a Vacuum Bag Only (VBO) process. An exemplary fabrication method includes the following steps:
a. forming a plurality of one-side tacky prepreg tapes according to the methods of claim 1 or claim 2,
b. dispensing, by automation, the prepreg tapes, side-by-side( with controlled gaps if needed), on a tool surface to form a first prepreg ply, wherein the tacky resin surface of each prepreg tape is facing the tool surface;
c. forming one or more subsequent prepreg plies on the first prepreg ply to create a stack of partially impregnated prepreg plies, each subsequent prepreg ply being formed by dispensing, by automation, a plurality of prepreg tapes, side-by-side, on the previously formed prepreg ply such that the resin surface of the subsequent prepreg tape is in contact with the prior formed prepreg ply;
d. enclosing the stack of prepreg plies in a vacuum envelope, which is defined between a flexible, non-porous film and a mold surface;
e. heating the stack of prepreg plies;
f. withdrawing air from the vacuum envelope to create a vacuum pressure sufficient for consolidating the stack of prepreg plies, thereby causing the resin in the prepreg plies to fill in any void spaces within the stack of prepreg plies; and
g. curing the consolidated stack of prepreg plies by applying heat to form a cured composite structure.

The cured composite structured fabricated by the above method is free or substantially free of voids. Voids can be as measured by determining porosity of the composite structure.

The flexible, non-porous film for creating the vacuum envelope may be made of an elastic material such as fluoropolymer.

The mold surface on which the stack of prepreg plies is placed may be a curved surface or have other three dimension configuration representing the shape of the final composite structure.

During the VBO process, the prepreg resin is heated to a temperature that would melt the resin to a low viscosity that allows the resin to flow into the void spaces within the stack of prepreg plies.

### EXAMPLES

### Example 1

A prepreg composed of Cycom 5320-1 resin from Cytec Engineered Materials Inc. and IM-7 unidirectional carbon fibers was manufactured using a dual filming impregnation method at an impregnation level of 92% as measured by water pick-up method. This level of impregnation was needed to assure the prepreg material will slit properly. The prepreg material was subsequently slit into 6.35 mm wide prepreg tapes where a polyester backing layer was temporarily applied. These slit prepreg tapes were then placed by an AFP machine to make test panels. The panels were cured under vacuum in an oven to produce cured laminates.

The porosity of the cured laminate was measured by optical microscopy and was found to be 1.0- 2.0 %, which is above the acceptable limit of 0.5% for aerospace application. A cross-sectional view of the cured laminate is shown in **FIG. 5**. The cured laminate shows voids at the interlaminar zones where the tack on the surface of the slit tape where air was trapped during AFP lay-up.

### Example 2

The intent was to move the air removal mechanism to the surface of the prepreg material while maintaining the ability to slit the prepreg material into narrow widths for AFP placement. To accomplish this objective, a binder-coated fiber web of unidirectional carbon fibers was used as the core reinforcement. An assembly of a carbon fiber web coated with a polyhydroxyether and polyurethane binder (2.5%) and a nonwoven carbon veil was fed into a laminating machine where a single 98 gsm Cycom 5320-1 epoxy resin film was laminated to the veil face with the veil against the heat source on the laminating machine such that only partial impregnation occurred. Impregnation temperature at 170°F, 180°F and 190°F were applied in different runs. The resulting material had a tacky surface only on one side and was dry on the other side.

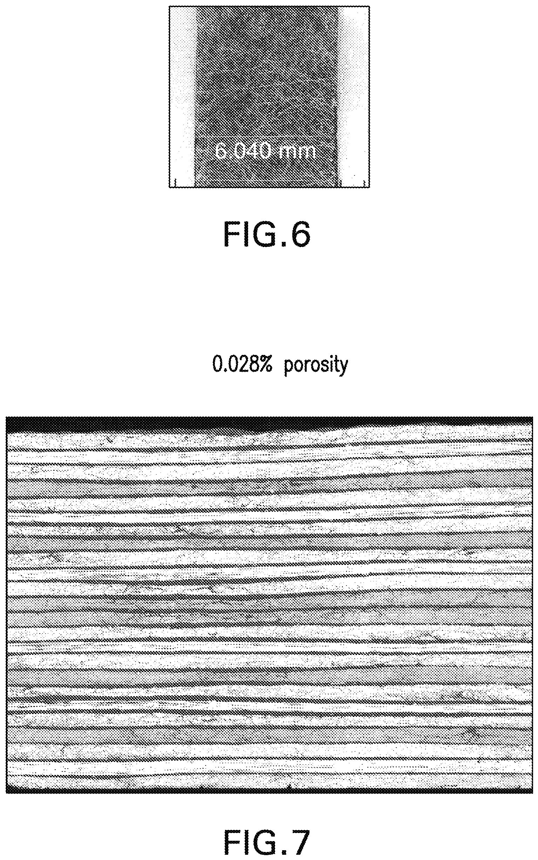

The one-side tacky material was slit into 6.04 mm wide tapes. **FIG. 6** shows a top view of a portion of the slit tape formed at 190°F impregnation temperature.

The slit tapes were used to form a laminate, which was subsequently cured under vacuum of 29 in Hg at 250°F for 2 hrs, then 350°F for 2 hrs.

Water pick-up test was carried out by soaking samples of the uncured laminates in water. The weight before and after soaking was measured. The estimated level of impregnation was determined based on the percentage (%) of water uptake. The lowest level of impregnation (in weight %) was found to be 85.15% and the highest was 94.37%. These results show that the partially impregnated prepreg of this example could be slit cleanly without creating fuzzing when the level of impregnation was below 90%. Normally, slitting prepreg having impregnation level below 94% would have been very difficult due to the presence of too much dry fibers.

The cured laminate was sectioned and porosity was measured by optical microscopy. The optical porosity was found to be 0.028%. FIG. 7 shows the cross-sectional view of the cured laminate. The results show that, by shifting the air removal mechanism to the exposed surface of the fiber web by the use of a one-side-tacky material in combination with the binder coated unidirectional fiber web, a low void laminate is possible while preserving the ability to slit the material to narrow width for AFP application.

## Claims

1. A method for forming a partially impregnated prepreg tape for use in an automated placement process, said method comprising:
bonding a nonwoven veil (11) to a layer of unidirectional fiber tows (12) to form a fibrous laminate
bringing a layer of curable resin (10) into contact with the fibrous laminate such that the resin is in direct contact with the nonwoven veil;
pressing the layer of curable resin into the fibrous laminate while applying heat and pressure so that the nonwoven veil is embedded in the layer of curable resin and the unidirectional fiber tows are partly surrounded by the curable resin, thereby forming a partially impregnated prepreg having a continuous resin surface only on one side;
slitting the partially impregnated prepreg into narrow-width, continuous prepreg tapes.

2. A method for forming a partially impregnated prepreg tape for use in an automated placement process, said method comprising:
forming a fibrous laminate in which a layer of unidirectional fiber tows (21) is sandwiched between a first nonwoven veil (22) and a second nonwoven veil (23) bringing a layer of curable resin (20) into contact with one side of the fibrous laminate such that the first nonwoven veil is in direct contact with the curable resin;
pressing the layer of curable resin into the fibrous laminate while applying heat and pressure so that the first nonwoven veil is embedded in the layer of curable resin and the unidirectional fiber tows are partly surrounded by the resin, but the second nonwoven veil is free of said resin, thereby forming a partially impregnated prepreg having a resin surface and a dry surface that is free of said curable resin;
slitting the partially impregnated prepreg into narrow-width, continuous prepreg tapes.

3. The method of claim 1 or 2, wherein the nonwoven veil (11) or veils (22,23) is or are comprised of randomly oriented carbon fibers or thermoplastic fibers.

4. The method of claim 1, wherein the nonwoven veil (11) is comprised of randomly oriented carbon fibers, and
wherein the nonwoven veil is bonded to the layer of unidirectional fiber tows by: (i) applying a first binder to at least one of the nonwoven veil and the layer of unidirectional fiber tows, and (ii) bonding the nonwoven veil to the layer of unidirectional fiber tows to form a fibrous laminate.

5. The method of claim 1, wherein the nonwoven veil (11) is comprised of randomly oriented carbon fibers, and
wherein the nonwoven veil is bonded to the layer of unidirectional fiber tows by: (i) applying a first binder to at least one of the nonwoven veil and the layer of unidirectional fiber tows, (ii) bonding the nonwoven veil to the layer of unidirectional fiber tows to form a fibrous laminate, (iii) applying a second binder in liquid form to the fibrous laminate, and (iv) drying the binder-treated fibrous laminate.

6. The method of claim 2, wherein the nonwoven veils (22,23) are comprised of randomly oriented thermoplastic fibers, and the fibrous laminate is formed by applying heat and pressure to the nonwoven veils so that the veils adhere to the layer of unidirectional fiber tows.

7. A method for forming a composite structure, said method comprising:
(a) forming a plurality of partially impregnated prepreg tapes according to the method of any one of the preceding claims,
(b) dispensing, by automation, the prepreg tapes, side-by-side, on a tool surface to form a first prepreg ply, wherein the resin surface of each prepreg tape is facing the tool surface;
(c) forming one or more subsequent prepreg plies on the first prepreg ply to form a stack of partially impregnated prepreg plies, each subsequent prepreg ply being formed by dispensing, by automation, a plurality of prepreg tapes, side-by-side, on the previously formed prepreg ply such that the resin surface of the subsequent prepreg tapes are in contact with the prior formed prepreg ply;
(d) enclosing the stack of prepreg plies in a vacuum envelope, which is defined between a flexible, non-porous film and a mold surface;
(e) heating the stack of prepreg plies;
(f) evacuating the vacuum envelope to create a vacuum pressure sufficient for consolidating the stack of prepreg plies, thereby causing the resin in the prepreg plies to fill in any void spaces within the stack of prepreg plies; and
(g) curing the consolidated stack of prepreg plies by applying heat to form a cured composite structure.

8. The method of claim 7, wherein a gap is formed between adjacent prepreg tapes that are dispensed side-by-side at (a).

9. A partially impregnated prepreg tape for use in an automated placement process comprising:
a nonwoven veil (11) bonded to a layer of unidirectional fiber tows (12);
a layer of curable resin (10) in which the nonwoven veil is embedded,
wherein the unidirectional fiber tows are partly surrounded by the curable resin layer, and
wherein the partially impregnated prepreg tape has a continuous resin surface only on one side and a width in the range of 0.3 cm to 30.5 cm, and preferably, the partially impregnated prepreg tape has a length that is at least 10 times its width.

10. A partially impregnated prepreg tape for use in an automated placement process comprising:
a layer of unidirectional fiber tows (21) sandwiched between a first nonwoven veil (22) and a second nonwoven veil (23)
a layer of curable resin (20) in which the first nonwoven veil is embedded,
wherein the second nonwoven veil is not embedded in the layer of curable resin, and the unidirectional fiber tows are partly surrounded by the curable resin layer, and
wherein the partially impregnated prepreg tape has a continuous resin surface only on one side and a width in the range of 0.3 cm to 30.5 cm, and preferably, the partially impregnated prepreg tape has a length that is at least 10 times its width.

11. The partially impregnated prepreg tape according to claim 9 or 10, further comprising polymeric particles embedded in the layer of curable resin.

12. The partially impregnated prepreg tape according to any one of claims 9 to 11, wherein the layer of curable resin (10;20) comprises one or more epoxy resin(s) and a curing agent

13. The partially impregnated prepreg tape according to any one of claims 9 to 12, wherein the unidirectional fiber tows (12;21) are unidirectional carbon fiber tows.

14. The partially impregnated prepreg tape according to any one of claims 9, 11 and 12, wherein the nonwoven veil (11) is composed of randomly arranged thermoplastic fibers or carbon fibers or a combination thereof.

15. The partially impregnated prepreg tape according to any one of claims 10 to 12, wherein the first and second nonwoven veils (22,23) are composed of randomly arranged fibers selected from thermoplastic fibers, carbon fibers, and combination thereof.

## Patentansprüche

1. Verfahren zur Bildung eines teilimprägnierten Prepreg-Bandes zur Verwendung in einem automatischen Platzierungsprozess, wobei das Verfahren umfasst:
Bonden eines Vliesschleiers (11) an eine Schicht aus unidirektionalen Faserkabeln (12), um ein faseriges Laminat zu bilden,
Bringen einer Schicht aus härtbarem Harz (10) in Kontakt mit dem faserigen Laminat, so dass das Harz in direktem Kontakt mit dem Vliesschleier ist;
Pressen der Schicht des härtbaren Harzes in das faserige Laminat, während Wärme und Druck angewendet werden, so dass der Vliesschleier in die Schicht des härtbaren Harzes eingebettet wird und die unidirektionalen Faserkabel teilweise von dem härtbaren Harz umgeben sind, wodurch ein teilimprägniertes Prepreg gebildet wird, das nur auf einer Seite eine kontinuierliche Harzoberfläche aufweist;
Schlitzen des teilimprägnierten Prepregs zu kontinuierlichen Prepregbändern mit schmaler Breite.

2. Verfahren zur Bildung eines teilimprägnierten Prepreg-Bandes zur Verwendung in einem automatischen Platzierungsprozess, wobei das Verfahren umfasst:
Bilden eines faserigen Laminats, in dem eine Schicht aus unidirektionalen Faserkabeln (21) sandwichartig zwischen einem ersten Vliesschleier (22) und einem zweiten Vliesschleier (23) liegt, Bringen einer Schicht aus härtbarem Harz (20) in Kontakt mit einer Seite des faserigen Laminats, so dass der erste Vliesschleier in direktem Kontakt mit dem härtbaren Harz ist;
Pressen der Schicht des härtbaren Harzes in das faserige Laminat, während Wärme und Druck angewendet werden, so dass der erste Vliesschleier in die Schicht des härtbaren Harzes eingebettet wird und die unidirektionalen Faserkabel teilweise von dem Harz umgeben sind, jedoch der zweite Vliesschleier frei von dem Harz ist, wodurch ein teilimprägniertes Prepreg mit einer Harzoberfläche und einer trockenen Oberfläche, die frei von dem härtbaren Harz ist, gebildet wird;
Schlitzen des teilimprägnierten Prepregs zu kontinuierlichen Prepregbändern mit schmaler Breite.

3. Verfahren nach Anspruch 1 oder 2, wobei der Vliesschleier (11) oder die Vliesschleier (22, 23) aus statistisch orientierten Kohlefasern oder thermoplastischen Fasern zusammengesetzt ist oder sind.

4. Verfahren nach Anspruch 1, wobei der Vliesschleier (11) aus statistisch orientierten Kohlefasern zusammengesetzt ist, und
wobei der Vliesschleier an die Schicht der unidirektionalen Faserkabel gebondet wird durch: (i) Aufbringen eines ersten Bindemittels auf mindestens eines von dem Vliesschleier und der Schicht der unidirektionalen Faserkabel, und (ii) Bonden des Vliesschleiers an die Schicht der unidirektionalen Faserkabel, um ein faseriges Laminat zu bilden.

5. Verfahren nach Anspruch 1, wobei der Vliesschleier (11) aus statistisch orientierten Kohlefasern zusammengesetzt ist, und
wobei der Vliesschleier an die Schicht der unidirektionalen Faserkabel gebondet wird durch: (i) Aufbringen eines ersten Bindemittels auf mindestens eines von dem Vliesschleier und der Schicht der unidirektionalen Faserkabel, (ii) Bonden des Vliesschleiers an die Schicht der unidirektionalen Faserkabel, um ein faseriges Laminat zu bilden, (iii) Aufbringen eines zweiten Bindemittels in flüssiger Form auf das faserige Laminat und (iv) Trocknen des bindemittelbehandelten faserigen Laminats.

6. Verfahren nach Anspruch 2, wobei die Vliesschleier (22, 23) aus statistisch orientierten thermoplastischen Fasern zusammengesetzt sind, und das faserige Laminat durch Anwenden von Wärme und Druck auf die Vliesschleier gebildet wird, so dass die Schleier an der Schicht der unidirektionalen Faserkabel haften.

7. Verfahren zur Bildung einer Verbundstruktur, wobei das Verfahren umfasst:
(a) Bilden einer Vielzahl von teilimprägnierten Prepreg-Bändern gemäß dem Verfahren nach einem der vorhergehenden Ansprüche,
(b) Abgeben der Prepreg-Bänder nebeneinander mittels Automatisierung auf eine Werkzeugoberfläche, um eine erste Prepreg-Lage zu bilden, wobei die Harzoberfläche jedes Prepreg-Bandes zu der Werkzeugoberfläche weist;
(c) Bilden von einer oder mehreren nachfolgenden Prepreg-Lagen auf der ersten Prepreg-Lage, um einen Stapel aus teilimprägnierten Prepreg-Lagen zu bilden, wobei jede nachfolgende Prepreg-Lage durch Abgeben einer Vielzahl von Prepreg-Bändern durch Automatisierung nebeneinander auf die zuvor gebildete Prepreglage gebildet wird, so dass die Harzoberfläche der nachfolgenden Prepreg-Bänder in Kontakt mit der zuvor gebildeten Prepreg-Lage ist;
(d) Umschließen des Stapels der Prepreg-Lagen in einem Vakuumumschlag, der zwischen einem flexiblen nicht-porösen Film und einer Formwerkzeugoberfläche definiert ist;
(e) Erwärmen des Stapels der Prepreg-Lagen;
(f) Evakuieren des Vakuumumschlags, um einen ausreichenden Vakuumdruck zum Konsolidieren des Stapels der Prepreg-Lagen zu erzeugen, wodurch bewirkt wird, dass das Harz in den Prepreg-Lagen jegliche Leerräume innerhalb des Stapels der Prepreg-Lagen füllt; und
(g) Härten des konsolidierten Stapels der Prepreg-Lagen durch Anwenden von Wärme, um eine gehärtete Verbundstruktur zu bilden.

8. Verfahren nach Anspruch 7, wobei bei (a) zwischen benachbarten Prepreg-Bändern, die nebeneinander abgegeben werden, ein Spalt gebildet wird.

9. Teilimprägniertes Prepreg-Band zur Verwendung in einem automatischen Platzierungsprozess, umfassend:
einen Vliesschleier (11), der an eine Schicht von unidirektionalen Faserkabeln (12) gebondet wird;
eine Schicht aus härtbarem Harz (10), in die der Vliesschleier eingebettet wird,
wobei die unidirektionalen Faserkabel teilweise von der härtbaren Harzschicht umgeben sind, und
wobei das teilimprägnierte Prepreg-Band auf nur einer Seite eine kontinuierliche Harzoberfläche hat und eine Breite im Bereich von 0,3 cm bis 30,5 cm liegt, und wobei vorzugsweise das teilimprägnierte Prepreg-Band eine Länge hat, die mindestens dem 10-fachen seiner Breite entspricht.

10. Teilimprägniertes Prepreg-Band zur Verwendung in einem automatischen Platzierungsprozess, umfassend:
eine Schicht aus unidirektionalen Faserkabeln (21), die sandwichartig zwischen einem ersten Vliesschleier (22) und einem zweiten Vliesschleier (23) liegt,
eine Schicht aus härtbarem Harz (20), in die der erste Vliesschleier eingebettet wird,
wobei der zweite Vliesschleier nicht in die Schicht des härtbaren Harzes eingebettet wird, und die unidirektionalen Faserkabel teilweise von der härtbaren Harzschicht umgeben sind, und
wobei das teilimprägnierte Prepreg-Band auf nur einer Seite eine kontinuierliche Harzoberfläche hat und eine Breite im Bereich von 0,3 cm bis 30,5 cm liegt, und wobei vorzugsweise das teilimprägnierte Prepreg-Band eine Länge hat, die mindestens dem 10-fachen seiner Breite entspricht.

11. Teilimprägniertes Prepreg-Band nach Anspruch 9 oder 10, des Weiteren umfassend polymere Partikel, die in die Schicht des härtbaren Harzes eingebettet sind.

12. Teilimprägniertes Prepreg-Band nach einem der Ansprüche 9 bis 11, wobei die Schicht des härtbaren Harzes (10, 20) ein oder mehrere Epoxyharz(e) und ein Härtungsmittel umfasst.

13. Teilimprägniertes Prepreg-Band nach einem der Ansprüche 9 bis 12, wobei die unidirektionalen Faserkabel (12; 21) unidirektionale Kohlefaserkabel sind.

14. Teilimprägniertes Prepreg-Band nach einem der Ansprüche 9, 11 und 12, wobei der Vliesschleier (11) aus statistisch angeordneten thermoplastischen Fasern oder Kohlefasern oder einer Kombination davon zusammengesetzt ist.

15. Teilimprägniertes Prepreg-Band nach einem der Ansprüche 10 bis 12, wobei der erste und der zweite Vliesschleier (22, 23) aus statistisch angeordneten Fasern ausgewählt aus thermoplastischen Fasern, Kohlefasern und einer Kombination davon zusammengesetzt sind.

## Revendications

1. Procédé de formation d'un ruban de préimprégné partiellement imprégné à utiliser dans une opération de mise en place automatisée, ledit procédé comprenant :
le liage d'un voile non tissé (11) à une couche d'étoupes de fibres unidirectionnelles (12) pour former un stratifié fibreux ;
la mise d'une couche de résine durcissable (10) en contact avec le stratifié fibreux de telle sorte que la résine soit en contact direct avec le voile non tissé ;
le pressage de la couche de résine durcissable à l'intérieur du stratifié fibreux tout en appliquant chaleur et pression de telle sorte que le voile non tissé soit incorporé dans la couche de résine durcissable et les étoupes de fibres unidirectionnelles soient partiellement entourées par la résine durcissable, ce qui forme ainsi un préimprégné partiellement imprégné ayant une surface de résine continue sur un seul côté ;
l'incision du préimprégné partiellement imprégné en rubans de préimprégné continus de largeur étroite.

2. Procédé de formation d'un ruban de préimprégné partiellement imprégné à utiliser dans une opération de mise en place automatisée, ledit procédé comprenant :
la formation d'un stratifié fibreux dans lequel une couche d'étoupes de fibres unidirectionnelles (21) est intercalée entre un premier voile non tissé (22) et un deuxième voile non tissé (23) ;
la mise d'une couche de résine durcissable (20) en contact avec un côté du stratifié fibreux de telle sorte que le premier voile non tissé soit en contact direct avec la résine durcissable ;
le pressage de la couche de résine durcissable à l'intérieur du stratifié fibreux tout en appliquant chaleur et pression de telle sorte que le premier voile non tissé soit incorporé dans la couche de résine durcissable et les étoupes de fibres unidirectionnelles soient partiellement entourées par la résine, mais le deuxième voile non tissé soit dépourvu de ladite résine, ce qui forme ainsi un préimprégné partiellement imprégné ayant une surface de résine et une surface sèche qui est dépourvue de ladite résine durcissable ;
l'incision du préimprégné partiellement imprégné en rubans de préimprégné continus de largeur étroite.

3. Procédé de la revendication 1 ou 2, dans lequel le voile (11) ou les voiles (22, 23) non tissé(s) est ou sont composé(s) de fibres de carbone ou de fibres thermoplastiques orientées aléatoirement.

4. Procédé de la revendication 1, dans lequel le voile non tissé (11) est composé de fibres de carbone orientées aléatoirement, et
dans lequel le voile non tissé est lié à la couche d'étoupes de fibres unidirectionnelles par : (i) application d'un premier liant au voile non tissé et/ou à la couche d'étoupes de fibres unidirectionnelles, et (ii) liage du voile non tissé à la couche d'étoupes de fibres unidirectionnelles pour former un stratifié fibreux.

5. Procédé de la revendication 1, dans lequel le voile non tissé (11) est composé de fibres de carbone orientées aléatoirement, et
dans lequel le voile non tissé est lié à la couche d'étoupes de fibres unidirectionnelles par : (i) application d'un premier liant au voile non tissé et/ou à la couche d'étoupes de fibres unidirectionnelles, (ii) liage du voile non tissé à la couche d'étoupes de fibres unidirectionnelles pour former un stratifié fibreux, (iii) application d'un deuxième liant sous forme liquide au stratifié fibreux, et (iv) séchage du stratifié fibreux traité par liant.

6. Procédé de la revendication 2, dans lequel les voiles non tissés (22, 23) sont composés de fibres thermoplastiques orientées aléatoirement, et le stratifié fibreux est formé par application de chaleur et pression aux voiles non tissés de telle sorte que les voiles adhèrent à la couche d'étoupes de fibres unidirectionnelles.

7. Procédé de formation d'une structure composite, ledit procédé comprenant :
(a) la formation d'une pluralité de rubans de préimprégné partiellement imprégné selon le procédé de l'une quelconque des revendications précédentes,
(b) l'application, par automatisation, des rubans de préimprégné, côte à côte, sur une surface d'outil pour former un premier pli de préimprégné, la surface de résine de chaque ruban de préimprégné faisant face à la surface d'outil ;
(c) la formation d'un ou plusieurs plis de préimprégné suivants sur le premier pli de préimprégné pour former un empilement de plis de préimprégné partiellement imprégné, chaque pli de préimprégné suivant étant formé par application, par automatisation, d'une pluralité de rubans de préimprégné, côte à côte, sur le pli de préimprégné formé précédemment de telle sorte que la surface de résine des rubans de préimprégné suivants est en contact avec le pli de préimprégné formé précédemment ;
(d) l'enfermement de l'empilement de plis de préimprégné dans une enveloppe à vide, qui est définie entre un film souple, non poreux et une surface de moule ;
(e) le chauffage de l'empilement de plis de préimprégné ;
(f) l'évacuation de l'enveloppe à vide pour créer une dépression suffisante pour consolider l'empilement de plis de préimprégné, ce qui conduit ainsi la résine dans les plis de préimprégné à remplir tous les espaces vides à l'intérieur de l'empilement de plis de préimprégné ; et
(g) le durcissement de l'empilement consolidé de plis de préimprégné par application de chaleur pour former une structure composite durcie.

8. Procédé de la revendication 7, dans lequel un espace est formé entre rubans de préimprégné adjacents qui sont appliqués côte à côte en (a).

9. Ruban de préimprégné partiellement imprégné à utiliser dans une opération de mise en place automatisée comprenant :
un voile non tissé (11) lié à une couche d'étoupes de fibres unidirectionnelles (12) ;
une couche de résine durcissable (10) dans laquelle le voile non tissé est incorporé,
dans lequel les étoupes de fibres unidirectionnelles sont partiellement entourées par la couche de résine durcissable, et
dans lequel le ruban de préimprégné partiellement imprégné a une surface de résine continue sur un seul côté et une largeur dans la gamme de 0,3 cm à 30,5 cm, et de préférence, le ruban de préimprégné partiellement imprégné a une longueur qui fait au moins 10 fois sa largeur.

10. Ruban de préimprégné partiellement imprégné à utiliser dans une opération de mise en place automatisée comprenant :
une couche d'étoupes de fibres unidirectionnelles (21) intercalée entre un premier voile non tissé (22) et un deuxième voile non tissé (23) ;
une couche de résine durcissable (20) dans laquelle le premier voile non tissé est incorporé,
dans lequel le deuxième voile non tissé n'est pas incorporé dans la couche de résine durcissable, et les étoupes de fibres unidirectionnelles sont partiellement entourées par la couche de résine durcissable, et
dans lequel le ruban de préimprégné partiellement imprégné a une surface de résine continue sur un seul côté et une largeur dans la gamme de 0,3 cm à 30,5 cm, et de préférence, le ruban de préimprégné partiellement imprégné a une longueur qui fait au moins 10 fois sa largeur.

11. Ruban de préimprégné partiellement imprégné selon la revendication 9 ou 10, comprenant en outre des particules polymères incorporées dans la couche de résine durcissable.

12. Ruban de préimprégné partiellement imprégné selon l'une quelconque des revendications 9 à 11, dans lequel la couche de résine durcissable (10 ; 20) comprend une ou plusieurs résine(s) époxy et un durcisseur.

13. Ruban de préimprégné partiellement imprégné selon l'une quelconque des revendications 9 à 12, dans lequel les étoupes de fibres unidirectionnelles (12 ; 21) sont des étoupes de fibres de carbone unidirectionnelles.

14. Ruban de préimprégné partiellement imprégné selon l'une quelconque des revendications 9, 11 et 12, dans lequel le voile non tissé (11) est composé de fibres thermoplastiques ou de fibres de carbone disposées aléatoirement, ou d'une combinaison de celles-ci.

15. Ruban de préimprégné partiellement imprégné selon l'une quelconque des revendications 10 à 12, dans lequel les premier et deuxième voiles non tissés (22, 23) sont composés de fibres disposées aléatoirement choisies parmi des fibres thermoplastiques, des fibres de carbone, et une combinaison de celles-ci.
